# EUROPÄISCHE PATENTANMELDUNG

(11) **EP 4 443 820 A1**
(43) Veröffentlichungstag der Anmeldung: **09.10.2024**
(21) Anmeldenummer: 23167161.1
(22) Anmeldetag: 06.04.2023
(51) Int. Cl.: H04L 12/10, H04L 12/40

(54) **ETHERNET SWITCH MIT INTEGRIERTEM NETZTEIL**

(71) Anmelder: Murrelektronik GmbH, 71570 Oppenweiler (DE)
(72) Erfinder: Prein, Olaf, 32676 Lügde-Rischenau (DE); Rentschler, Markus, 72581 Dettingen (DE); Wolff, Ingo, 74613 Öhringen (DE)
(74) Vertreter: Karzel, Philipp

(57) **Zusammenfassung**

Die Erfindung betrifft einen Ethernet Switch (1) mit einem Gehäuse (2), das zumindest einen Kommunikationseingang (3) für Daten einer Steuerung (4), zumindest einen Netzeingang (7) für eine Netzspannung () sowie zumindest einen Kommunikationsausgang (5) aufweist. Ferner ist zumindest ein Spannungsausgang (8) zu einem elektrischen Verbraucher (10) vorgesehen. Nach der Erfindung ist im Gehäuse (2) des Switches (1) ein Netzteil (11) vorgesehen, das die Spannungsversorgung des Switches (1) bereitstellt. Ferner speist das Netzteil (11) den zumindest einen Spannungsausgang (8) zu einem externen Verbraucher (10). Im Gehäuse (2) des Switch (1) ist ein Feldbuselement (20) integriert ist, das vorzugsweise zum Monitoring und/oder zur Steuerung des Spannungsausgangs (8) zu einem externen Verbraucher (10) ausgebildet ist.

## Beschreibung

Die Erfindung betrifft einen Ethernet Switch mit einem Gehäuse, welches zumindest einen Kommunikationseingang für Daten einer Steuerung und zumindest einen Kommunikationsausgang zur Ansteuerung von zumindest einem Modul aufweist. Ferner sind ein Netzeingang für eine Netzspannung sowie zumindest ein elektrischer Versorgungsausgang zu einem elektrischen Verbraucher vorgesehen.

Es ist bekannt, über eine Netzwerkverkabelung auch die Stromversorgung von angeschlossenen elektrischen Verbrauchern wie Kommunikationsgeräte, Sensoren und/oder Aktoren bereitzustellen. In einer einfachen Ausführung ist dies unter dem Begriff PoE (Power over Ethernet) bekannt, bei dem für die Datenübertragung nicht genutzte Einzelleitungen eines Ethernet Kabels zur Stromversorgung genutzt werden. Bei einem Single-Pair-Ethernet kommt eine sogenannte PoDL (Power over Data Line) Technik zum Einsatz, bei dem die zu übertragenden Daten der spannungsführenden Leitung per Modulation überlagert werden.

In Produktionsanlagen, Förderanlagen oder dergleichen Anlagen größerer räumlicher Ausbreitung werden Datenleitungen und/oder Leitungen der Stromversorgung häufig parallel verlegt, insbesondere dann, wenn im System vorhandene elektrische Verbraucher (Sensoren und/oder Aktoren) mit unterschiedlichen Spannungen zu betreiben sind.

Der Erfindung liegt die Aufgabe zugrunde, einen einfach aufgebauten, vielfältig einsetzbaren Ethernet Switch zum Einsatz in industriellen Anlagen größerer räumlicher Ausbreitung anzugeben, über den verschiedene elektrische Verbraucher mit Energie versorgt und angesteuert werden können.

Die Aufgabe wird dadurch gelöst, dass im Gehäuse des Switchs selbst ein Netzteil vorgesehen ist, welches einerseits die Spannungsversorgung des Switchs selbst bereitstellt und andererseits über den zumindest einen elektrischen Versorgungsausgang einen externen Verbraucher speist. In besonderer Weise ist im Gehäuse des Switchs ein Feldbuselement integriert. Das Feldbuselement arbeitet vorteilhaft mit Protokollen eines Profinet (**Pro**cess **Fi**eld Net**work**), einem Ethernet/IP (EtherNet **I**ndustrial **P**rotocol, oft auch EIP genannt), einem OPC/UA (**O**pen **P**latform **C**ommunication / **U**nified **A**rchitecture) und/oder einem EtherCAT (**Ether**net **C**ontrol **A**utomation **T**echnology). Das Feldbuselement ist ausgebildet zum Monitoring und/oder zur Steuerung des elektrischen Versorgungsausgangs. Dies eröffnet die Möglichkeit, über das Feldbuselement im Gehäuse des Switchs einen angeschlossenen externen Verbraucher elektrisch zu überwachen. Die Überwachung ermöglicht Fehlfunktionen frühzeitig zu erkennen und über den Feldbus - z.B. einer zentralen Steuerung - zu melden. Darüber hinaus ermöglicht die Steuerung des elektrischen Versorgungsausgangs den einem externen Verbraucher zugeführten Spannungspegel, den zugeführten Strom und/oder die zugeführte Leistung zu variieren. Insbesondere wird bei einem POE-Ausgang die Leistung begrenzt bzw. an einem PoE-Ausgang ist ein Management für die Leistung vorgesehen. Bei einem IO-Link Ausgang beschränkt man den maximalen Strom.

Insbesondere ist die Möglichkeit gegeben, in Abhängigkeit der Kenndaten des angeschlossenen externen Verbrauchers eine dem Verbraucher angepasste Versorgungsspannung zur Verfügung zu stellen.

Dem Switch muss lediglich über nur einen Anschluss eine Netzspannung zugeführt sein, mit dem das Netzteil im Switch betrieben werden kann. In einer abführenden Leitung des Switchs kann vorteilhaft jeweils ein Versorgungsausgang integriert sein, so dass ein anzuschließender Verbraucher nicht nur über eine Kommunikationsverbindung gesteuert werden kann, sondern zugleich an eine Versorgungsspannung angeschlossen ist. Die Versorgungsspannung kann vorteilhaft variabel sein, insbesondere an Kenndaten des Verbrauchers angepasst sein. So kann die Höhe der Versorgungsspannung eingestellt werden, der maximale Strom eingestellt werden oder die abgegebene elektrische Leistung eingestellt werden. Die Einstellung der elektrischen Werte kann auch nach einem Mittelwert eingestellt werden, indem die Spannung und/oder der Strom ein- und ausgeschaltet wird.

In Weiterbildung der Erfindung ist der Switch als Teilnehmer eines Feldbusses ausgebildet. Über den Feldbus können eine beliebige Anzahl von Switches angeschlossen sein. Die zum Betrieb des Netzteils notwendige Netzspannung wird zu den jeweiligen Switches im Feld durchgeschleift. Alternativ oder zusätzlich kann vorgesehen sein, in dem die Netzspannung zuführenden Netzkabel ein oder mehrere T-Stücke vorzusehen, über die ein oder mehrere weitere Switches angeschlossen werden können.

In Weiterbildung der Erfindung ist vorgesehen, dass das Feldbuselement ausgebildet ist, die Konfiguration des Switchs selbst auszuführen. Der Switch ist so in einfacher Weise an seinen Einsatzort und die auszuführenden Arbeiten anpasst.

In besonderer Ausgestaltung der Erfindung ist das Feldbuselement im Gehäuse des Switchs vorgesehen und bildet insbesondere ein Gateway zu anderen Protokollen im Feld der Anlage. Auf diese Weise ist eine übergreifende Kommunikation zwischen verschiedenen Protokollen möglich.

Vorteilhaft ist der Versorgungsausgang des Switchs zumindest in einen PoE Ausgang (PoE = Power over Ethernet) integriert. Ein derartiger PoE Ausgang ist insbesondere steckbar ausgebildet. Zweckmäßig ist der PoE Ausgang in einer Schutzart IP 54 oder höher ausgeführt.

Alternativ oder zusätzlich kann der Versorgungsausgang auch in einen SPE (Single Pair Ethernet) Ausgang integriert sein. Ein derartiger Ausgang bildet somit einen PoDL (Power over Data Line) Ausgang. Vorzugsweise ist der mit dem Versorgungsausgang integrierte SPE Ausgang steckbar ausgebildet. Eine Schutzart der Steckverbindung von IP 54 oder höher ist zweckmäßig.

Alternativ oder zusätzlich kann der Versorgungsausgang zumindest auch in einen IO-Link Ausgang integriert sein. Der IO-Link Ausgang ist vorzugsweise steckbar ausgebildet. Zweckmäßig ist der IO-Link Ausgang in einer Schutzart IP 54 oder höher ausgeführt.

In Ausbildung der Erfindung ist vorgesehen, dass der Versorgungsausgang eine Ausgangsspannung des Netzteils führt. Diese Ausgangsspannung des Netzteils kann eine feste Ausgangsspannung oder eine variable Ausgangsspannung sein. Das Netzteil kann ebenso mehr als eine Ausgansspannung zur Verfügung stellen, die an jeweils einem oder mehreren Spannungsausgängen abgegriffen werden kann. Beispielhaft kann das Netzteil Ausgangsspannungen von 12 V, 24 V oder 48 V zur Verfügung stellen.

Der Spannungseingang für die Netzspannung des im Gehäuse des Switchs angeordneten Netzteils ist vorteilhaft auf einen im Gehäuse vorgesehenen Netzausgang für die Netzspannung durchgeschleift. So können in einfacher Weise mehrere Switches vorzugsweise in einer Reihe hintereinander an die gleiche Netzspannung angeschlossen werden.

Vorteilhaft ist der Kommunikationseingang für Daten einer Steuerung auf einen im Gehäuse vorgesehenen Kommunikationsausgang durchgeschleift. Die auf einer Datenleitung eines Feldbusses gesendeten Daten können über den Feldbus einer Vielzahl von Switches gleichzeitig zur Verfügung gestellt werden.

Um den Verkabelungsaufwand zu senken, kann es vorteilhaft sein, dass der Netzeingang des Switchs für die Netzspannung und der Kommunikationseingang des Switchs zu einer gemeinsamen Powerline zusammengefasst sind. Damit kann die Anzahl der Anschlüsse des Switchs reduziert werden.

Als Powerline wird ein gemeinsames Kabel für die Netzspannung und die Datenleitung verstanden. Diese kann als Hybridleitung ausgebildet sein, welche getrennte Leitungen für die Daten und die Versorgungsspannung aufweist. Vorteilhaft hat die Powerline für den Datenverkehr und die Netzspannung gemeinsame Leitungen. Zu übermittelnde Daten werden zweckmäßig der Netzspannung aufmoduliert.

Die Netzspannung kann in einem Bereich von 90 V bis 800 V AC/DC liegen. Vorteilhaft liegt sie in einem Bereich zwischen 100V bis 400V AC oder 600V bis 800V DC, insbesondere 650V AC. Mittels des Netzteils wird die Netzspannung z.B. auf eine Versorgungsspannung von 12 V, 24 V oder 48 V für angeschlossene elektrische Verbraucher wie Sensoren oder Aktoren umgeformt. Es sind auch Versorgungsspannungen von 36 bis 57V, zweckmäßig 42,5 bis 57V vorteilhaft. Insbesondere kann der PoE Ausgang den Spannungsbereich von 36 bis 57V aufweisen.

Um einen robusten Einsatz des Switchs im Feld zu ermöglichen ist vorgesehen, dass dieser eine Schutzklasse von IP 54 und höher aufweist.

Weitere Merkmale der Erfindung ergeben sich aus den weiteren Ansprüchen, der Beschreibung und der Zeichnung, in der nachstehend im einzelnen beschriebene Ausführungsbeispiele des erfindungsgemäßen Switchs wiedergegeben sind. Ein oder mehrere Merkmale der Ansprüche können - unabhängig vom Rückbezug der Ansprüche - untereinander und/oder mit Merkmalen aus der Beschreibung oder der Zeichnung kombiniert werden, um die Erfindung zu präzisieren.

### Die Figuren zeigen:

- Fig. 1: eine schematische Darstellung eines erfindungsgemäßen Switchs im Feld einer industriellen Anlage;
- Fig. 2: eine schematische Darstellung eines erfindungsgemäßen Switchs im Feld einer industriellen Anlage mit einer aus Netzanschluss und Datenleitung zusammengesetzter Powerline.

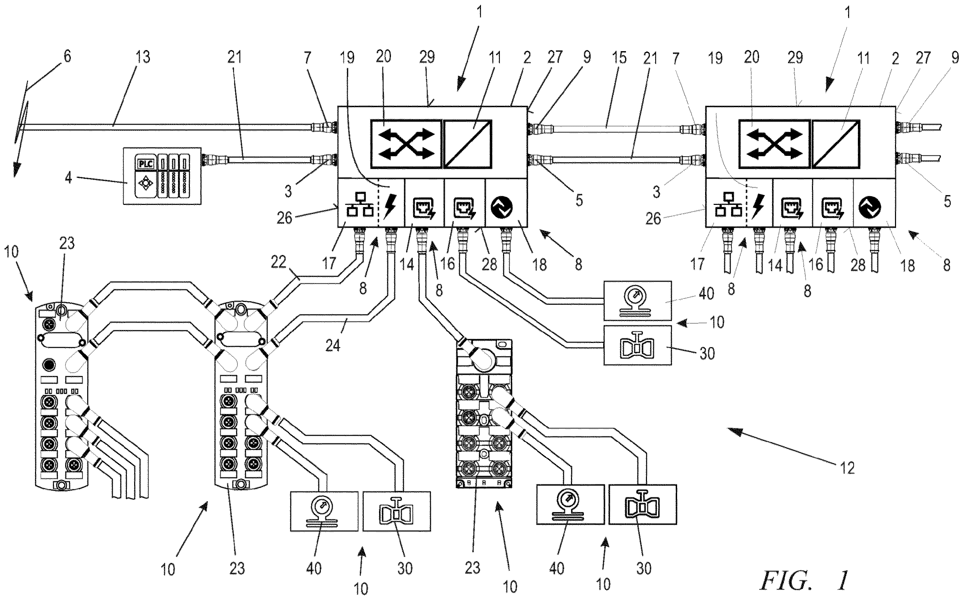

In Fig. 1 ist der erfindungsgemäße Switch mit dem Bezugszeichen 1 bezeichnet. Der Switch 1 weist ein Gehäuse 2 auf, welches eine hohe Schutzklasse aufweist. Der Switch 1 hat eine Schutzklasse von IP 54 oder höher. Der Switch 1 kann Teil einer Steuerung einer räumlich ausgedehnten Anlage 12, z.B. einer Produktionsanlage, einer Förderanlagen oder dergleichen Anlage sein.

Der Switch 1 weist einen Netzeingang 7 für eine Netzspannung 6 auf, die über ein Netzkabel 13 zugeführt ist. Die Netzspannung kann 90 V bis 800 V betragen. Insbesondere beträgt die Netzspannung 100V bis 400V AC, insbesondere 110V AC, vorzugsweise 230V AC bis 400V AC oder 600V bis 800V DC, insbesondere 650V DC. Der Netzeingang 7 für die Netzspannung 6 ist auf einen Netzausgang 9 für die Netzspannung 6 durchgeschleift. An den Netzausgang 9 kann über ein weiteres Netzkabel 15 ein weiteres Switch 1 angeschlossen werden.

Der Switch 1 hat ferner einen Kommunikationseingang 3 für die Daten einer Steuerung 4 und einen Kommunikationsausgang 5, über den die Daten der Steuerung 4 auf einen weiteren, insbesondere in Reihe nachgeschalteten Switch 1 weitergegeben werden können. Die Steuerung kann eine PLC (Programmable Logic Controller) Steuerung, ein PC oder dgl. sein.

Im Gehäuse 2 des Switchs 1 ist ein Netzteil 11 angeordnet. Das Netzteil 11 ist auf seiner Primärseite an die Netzspannung 6 angeschlossen. Auf der Sekundärseite des Netzteils 11 ist zumindest eine Ausgangsspannung verfügbar. Die Ausgangsspannung kann zum Beispiel 12 V, 24 V 48 V oder dergleichen Spannung sein. Insbesondere kann das Netzteil mehrere parallele Ausgangsspannungen zur Verfügung stellen. In besonderer Ausgestaltung sind die Ausgangsspannung und/oder der Ausgangsstrom einstellbar.

Das Netzteil 11 dient der elektrischen Stromversorgung angeschlossener Verbraucher 10. Hierzu wird die Ausgangsspannung des Netzteils 11 über einen Versorgungsausgang 8 einem elektrischen Verbraucher 10 zugeführt.

Das im Gehäuse 2 des Switchs 1 vorgesehene Netzteil 11 ist dazu ausgebildet, auch die Spannungsversorgung des Switchs 1 selbst bereitzustellen. Neben der Spannungsversorgung zumindest eines Versorgungsausgangs 8 zu einem externen Verbraucher 10 dient das Netzteil gleichzeitig zur Energieversorgung des Switchs 1 selbst.

Hervorzuheben ist, dass im Gehäuse 2 ein Feldbuselement 20 integriert ist, das zum Monitoring und/oder zur Steuerung eines Versorgungsausgangs 8 zu einem externen Verbraucher 10 ausgebildet ist. Das Feldbuselement 20 ist ausgebildet, die Stromaufnahme eines angeschlossenen elektrischen Verbrauchers 10 zu überwachen, sodass zum Beispiel bei Überschreiten eines Stromgrenzwertes das Feldbuselement 20 eine Meldung über den Feldbus 12 ausgeben kann. Darüber hinaus ist das Feldbuselement 20 ausgebildet, die Spannung und/oder den Strom eines Versorgungsausgangs 8 zu verändern. So kann zum Beispiel bei einem Aktor 30 ein kurzzeitiger, hoher Startstrom initiiert werden, um ein schnelles Ansprechen des Aktors 30 zu gewährleisten. Eine zu hohe Stromaufnahme eines Sensors 40 kann ein Indiz für einen bevorstehenden Ausfall sein, was über das Feldbuselement 20 erkannt und im Feldbus 21 z.B. an eine zentrale Steuerung gemeldet wird. Dabei ist der Switch 1 vorteilhaft als Teilnehmer des Feldbusses 21 ausgebildet.

In besonderer Ausgestaltung der Erfindung ist das Feldbuselement 20 ausgebildet, die Konfiguration des Switchs 1 zum Betrieb am Feldbus 21 auszuführen. Mit Einschalten der Netzspannung 6 wird der Switch 1 eine Selbstkonfiguration starten und ausführen, um dann ohne Eingriff durch einen Benutzer den Betrieb aufzunehmen.

Um eine möglichst breite Verwendung des erfindungsgemäßen Switchs 1 zu gewährleisten ist vorgesehen, das Feldbuselement 20 derart auszubilden, dass es ein Gateway zu anderen Protokollen im Feld der Anlage 12 bildet. Der Switch 1 kann unterschiedliche Protokolle verarbeiten.

Wie in Fig. 1 dargestellt, kann der Versorgungsausgang 8 zumindest in einen PoE Ausgang 14 (PoE = Power over Ethernet) integriert werden. Der PoE Ausgang ist vorzugsweise steckbar ausgebildet. Insbesondere ist er in einer Schutzart IP 54 oder höher ausgeführt.

Alternativ oder zusätzlich kann der Versorgungsausgang 8 auch in einen SPE Ausgang 16 (SPE = Single Pair Ethernet) integriert sein. Der SPE Ausgang ist vorzugsweise Steckbar. Insbesondere ist der SPE Ausgang in einer Schutzart IP 54 oder höher ausgeführt.

Es kann zweckmäßig sein, den Versorgungsausgang zumindest in einen IO-Link Ausgang 18 (IO = Punkt-zu-Punkt Kommunikation) zu integrieren. IO-Link ist streng genommen kein Feldbus, sondern eine Weiterentwicklung der bekannten Anschlusstechnik für Sensoren und Aktoren. Der IO-Link Ausgang 18 ist vorzugsweise steckbar ausgebildet. Insbesondere ist der IO-Link Ausgang 18 in einer Schutzart IP 54 oder höher ausgeführt. In Ausgestaltung des Switchs 1 kann dieser auch einen Standard Ethernet Anschluss 17 aufweisen. Die Spannungsversorgung angeschlossener Verteiler 23 kann auch getrennt zum Ethernet Kabel 22 über eine Spannungsversorgungsleitung 24 erfolgen, die an einer einfachen Spannungsdose 19 des Switchs 1 angeschlossen ist.

Im Ausführungsbeispiel nach Fig. 1 ist das Gehäuse 2 des Switchs 1 in Draufsicht im Wesentlichen rechteckförmig mit Längsseiten und Schmalseiten ausgebildet. Der Kommunikationseingang 3 und der Netzeingang 7 liegen auf einer Schmalseite 26 des Gehäuses 2. Der durchgeschleifte Kommunikationsausgang 5 und der durchgeschleifte Netzausgang 9 liegen auf der anderen, gegenüberliegenden Schmalseite 27 des Gehäuses 2.

Die erfindungsgemäßen Spannungsausgänge 8, unabhängig davon, ob sie als PoE Ausgang 14, als SPE Ausgang 16, als IO-Linkausgang 18 oder dergleichen Ausgang ausgebildet sind, liegen auf einer gemeinsamen Längsseite 28 des Gehäuses 2. Im Ausführungsbeispiel ist die gegenüberliegende Längsseite 29 des Gehäuses 2 frei von Anschlüssen. Es kann zweckmäßig sein, auch auf der Längsseite 29 Datenausgänge, Spannungsausgänge oder dergleichen anzuordnen.

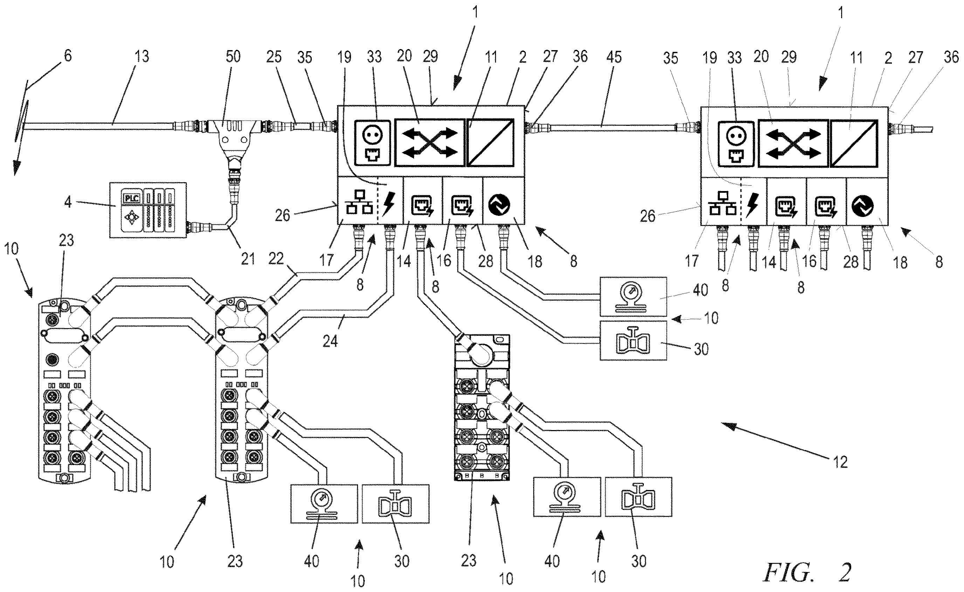

Das Ausführungsbeispiel nach Fig. 2 entspricht im Grundaufbau dem nach Fig. 1; gleiche Teile sind mit gleichen Bezugszeichen versehen.

In Fig. 1 ist der Switch 1 mit einer Powerline 25 verbunden, die an einem Powerline Eingang 35 angeschlossen ist. Der Powerline Eingang 35 liegt bevorzugt auf einer Schmalseite 26 des Gehäuses 1. Auf der gegenüberliegenden Seite des Gehäuses 1, insbesondere auf der gegenüberliegenden Schmalseite 27 des Gehäuses 1, ist ein Powerline Ausgang 36 vorgesehen, der über ein Powerline Kabel 45 mit einem folgenden Switch 1 verbunden sein kann.

Über ein Koppelelement 50 ist die Datenleitung (Feldbus 21) der Steuerung 4 mit den Netzkabel 13 der Netzspannung 6 verbunden. Im Koppelelement 50 werden der Netzspannung die zu übertragenden Daten überlagert, vorzugsweise aufmoduliert. Eine Trennung der übermittelten Daten und von der Netzspannung erfolgte im Switch 1.

Es kann vorteilhaft sein, im Gehäuse 2 des Switchs 1 einen Steckanschluss 33 vorzusehen, über den zum Beispiel Netzgeräte unmittelbar an die Netzspannung 6 angeschlossen werden können.

Das im Switch 1 verbaute Netzteil 11 kann ein Transformator oder ein Schaltnetzteil sein.

## Patentansprüche

1. Ethernet Switch (1) mit einem Gehäuse (2), das zumindest einen Kommunikationseingang (3) für Daten einer Steuerung (4), zumindest einen Netzeingang (7) für eine Netzspannung (35) sowie zumindest einem Kommunikationsausgang (5) aufweist, und mit zumindest einem elektrischen Versorgungsausgang (8) zu einem elektrischen Verbraucher (10),
**dadurch gekennzeichnet,**
**dass** im Gehäuse (2) des Switches (1) ein Netzteil (11) vorgesehen ist, dass das Netzteil (11) die Spannungsversorgung des Switches (1) bereitstellt, dass das Netzteil (11) den zumindest einen elektrischen Versorgungsausgang (8) zu einem externen Verbraucher (10) speist, und dass im Gehäuse (2) ein Feldbuselement (20) integriert ist, das zum Monitoring und/oder zur Steuerung des elektrischen Versorgungsausgangs (8) zu einem externen Verbraucher (10) ausgebildet ist.

2. Switch nach Anspruch 1,
**dadurch gekennzeichnet, dass** der Switch (1) als Teilnehmer eines Feldbusses (21) ausgebildet ist.

3. Switch nach Anspruch 1 oder 2,
**dadurch gekennzeichnet, dass** das Feldbuselement (20) ausgebildet ist, die Konfiguration des Switches (1) auszuführen.

4. Switch nach einem der Ansprüche 1 bis 3,
**dadurch gekennzeichnet, dass** das Feldbuselement (20) ausgebildet ist, ein Gateway zu anderen Protokollen im Feld zu bilden.

5. Switch nach einem der Ansprüche 1 bis 4,
**dadurch gekennzeichnet, dass** der elektrische Versorgungsausgang (8) zumindest in einen PoE Ausgang (14) integriert ist, der vorzugsweise steckbar ausgebildet ist und insbesondere in einer Schutzart IP54 oder höher ausgeführt ist.

6. Switch nach einem der Ansprüche 1 bis 5,
**dadurch gekennzeichnet, dass** der elektrische Versorgungsausgang (8) zumindest in einen SPE Ausgang (16) integriert ist, der vorzugsweise steckbar ausgebildet ist und insbesondere in einer Schutzart IP54 oder höher ausgeführt ist.

7. Switch nach einem der Ansprüche 1 bis 6,
**dadurch gekennzeichnet, dass** der elektrische Versorgungsausgang (8) zumindest in einen IO-Link (18) Ausgang integriert ist, der vorzugsweise steckbar ausgebildet ist und insbesondere in einer Schutzart IP54 oder höher ausgeführt ist.

8. Switch nach einem der Ansprüche 1 bis 7,
**dadurch gekennzeichnet, dass** der elektrische Versorgungsausgang (8) eine Ausgangsspannung des Netzteils (11) führt.

9. Switch nach einem der Ansprüche 1 bis 8,
**dadurch gekennzeichnet, dass** der Netzeingang (7) für die Netzspannung (6) auf einen im Gehäuse (2) vorgesehenen Netzausgang (9) für die Netzspannung (6) durchgeschleift ist.

10. Switch nach einem der Ansprüche 1 bis 9,
**dadurch gekennzeichnet, dass** der Kommunikationseingang (3) für Daten einer Steuerung (4) auf einen im Gehäuse (2) vorgesehenen Kommunikationsausgang (5) durchgeschleift ist.

11. Switch nach einem der Ansprüche 1 bis 10,
**dadurch gekennzeichnet, dass** der Spannungseingang (7) und der Kommunikationseingang (3) zu einer Powerline (25) zusammengefasst sind.

12. Switch nach einem der Ansprüche 1 bis 11,
**dadurch gekennzeichnet, dass** die Netzspannung (6) 90V bis 800V AC beträgt, insbesondere eine Nennspannung von 110 V bis 480V AC, insbesondere eine Netzspannung in einem Bereich von 600V DC bis 800V DC aufweist.

13. Switch nach Anspruch 1,
**dadurch gekennzeichnet, dass** der Switch (1) eine Schutzklasse von IP54 und höher aufweist.
